# FASCICULE DE BREVET EUROPEEN

(11) **EP 4 490 006 B1**
(45) Date de publication et mention de la délivrance du brevet: **21.01.2026**
(21) Numéro de dépôt: 23707129.5
(22) Date de dépôt: 02.02.2023
(51) Int. Cl.: B60W 30/18, B60W 30/14

(54) **ASSISTANCE À LA CONDUITE D'UN VÉHICULE PAR DÉTECTION DE LA PERTINENCE DE PANNEAUX**
FAHRERASSISTENZ FÜR EIN FAHRZEUG DURCH ERKENNUNG DER VERKEHRSZEICHEN-PERTINENZ
DRIVING ASSISTANCE FOR A VEHICLE BY DETECTING THE PERTINENCE OF SIGNS

(30) Priorité: 07.03.2022 FR 2201946
(43) Date de publication de la demande: 15.01.2025
(73) Titulaire: Stellantis Auto SAS, 78300 Poissy (FR)
(72) Inventeur: GRAU, Thomas, 75015 PARIS 15 (FR); MAHTOUT, Imane, 75012 PARIS 12 (FR); ETCHEVERRY, Celine, 91370 VERRIERES LE BUISSON (FR); BRACONNIER, Jean-baptiste, 91120 PALAISEAU (FR)
(74) Mandataire: ESIP
(86) Numéro de dépôt international: PCT/FR2023/050142
(87) Numéro de publication internationale: WO 2023/170348

(56) Documents cités:
- WO-A1-2021/138618
- DE-A1- 102006 023 544
- DE-A1- 102019 125 215

## Description

La présente invention appartient au domaine de l'assistance à la conduite d'un véhicule automobile à l'approche de panneaux.

Elle est particulièrement avantageuse dans les situations dans lesquelles un ou des panneaux stop ou de cédez-le-passage sont situés en avant d'un véhicule.

On entend par « véhicule » tout type de véhicule tel qu'un véhicule automobile, un cyclomoteur, une motocyclette, etc.

On entend par « conduite autonome » d'un « véhicule autonome » toute méthode apte à assister la conduite du véhicule. La méthode peut ainsi consister à diriger partiellement ou totalement le véhicule ou à apporter tout type d'aide à une personne physique conduisant le véhicule. Ainsi, « conduite autonome » couvre l'ensemble des niveaux 0 à 5 du barème de l'OICA, pour Organisation International des Constructeurs Automobiles.

L'assistance à la conduite peut intervenir à différents niveaux d'autonomie : de la conduite autonome sans intervention du conducteur, à l'assistance à la conduite manuelle.

Des systèmes d'aide à la conduite, de type ADAS par exemple, pour Advanced Driver-Assistance Systems en anglais, permettent d'assister le conducteur du véhicule voire de contrôler intégralement certains paramètres du pilotage du véhicule, tels que la vitesse par exemple.

Ces systèmes permettent d'améliorer le confort de conduite ainsi que la sécurité, en tirant partie de données issues de capteurs du véhicule, d'une caméra et/ou de données cartographiques de route. Aucune restriction n'est attachée à de tels capteurs, qui peuvent être des dispositifs de géolocalisation, des capteurs de vitesse et/ou des capteurs de type radar ou lidar.

Des fonctionnalités de système ADAS permettent d'assister la conduite du véhicule à l'approche de panneaux de signalisation, notamment de panneaux de stop et/ou de cédez-le-passage. Les fonctionnalités ADAS comprennent notamment la régulation de la vitesse du véhicule en fonction de la détection de tels panneaux.

Ces fonctionnalités sont généralement basées sur une détection de pertinence des panneaux de signalisation en fonction de leur distance latérale par rapport à une route sur laquelle circule le véhicule automobile.

Toutefois, elles manquent de précision dans la détermination de la pertinence des panneaux, ce qui induit des accélérations/décélérations intempestives pouvant causer au mieux un inconfort de conduite, et au pire, des problèmes de sécurité.

En outre l'état de la technique est connu des documents DE102019125215A1 et DE102006023544A1.

La présente invention vient améliorer la situation.

A cet effet, un premier aspect de l'invention concerne un procédé d'assistance à la conduite d'un véhicule automobile mis en œuvre par un module d'assistance à la conduite du véhicule automobile et comprenant les étapes suivantes :
- réception de données représentatives d'une situation de conduite en avant du véhicule automobile
- détection d'un panneau de stop ou d'un panneau de cédez-le-passage à partir des données reçues ;
- détermination d'au moins un bord de voie de la route en fonction des données reçues ;
- estimation d'une distance longitudinale entre un début ou une fin du bord de voie de la route et le panneau ;
- application de règles de pertinence prédéterminées au moins à ladite distance longitudinale pour déterminer si le panneau de stop ou de cédez-le-passage est pertinent ou non pour le véhicule automobile ;
- si le panneau de stop ou de cédez-le-passage est pertinent pour le véhicule automobile, génération d'une consigne d'assistance à la conduite et transmission de la consigne à un module de contrôle du véhicule.

Ainsi, la distance longitudinale est avantageusement prise en compte dans la détermination de la pertinence d'un panneau de type stop ou cédez-le-passage. La fiabilité de la détermination de la pertinence de tels panneaux est ainsi avantageusement améliorée, ce qui évite des freinages intempestifs du véhicule automobile, voire de provoquer des situations de conduite dangereuses.

Selon un mode de réalisation, les règles de pertinence peuvent comprendre l'une au moins des règles suivantes :
- le panneau de stop ou de cédez-le-passage est considéré comme pertinent s'il est à une distance longitudinale inférieure à une première distance seuil prédéterminée d'une fin du bord de voie gauche ou droite dont le panneau est le plus proche latéralement ;
- le panneau de stop ou de cédez-le-passage est considéré comme pertinent s'il est à une distance longitudinale supérieure à une deuxième distance seuil prédéterminée d'un début de bord de voie gauche ou droit dont le panneau est le plus proche latéralement.

Ainsi, de simples comparaisons avec une valeur seuil prédéterminée permet de discriminer efficacement les panneaux pertinents de ceux qui ne le sont pas.

De manière complémentaire, les première et deuxième distances seuil prédéterminées peuvent être comprises entre 2 et 4 mètres, par exemple égales à 3 mètres.

De telles valeurs sont les plus discriminantes dans la plupart des situations de conduite. Selon un mode de réalisation, les règles de pertinence prédéterminées peuvent être appliquées à la distance longitudinale déterminée, au type de panneau détecté parmi un panneau de stop et un panneau de cédez-le-passage, et au bord de voie le plus proche latéralement du panneau.

Ainsi, le nombre de facteurs considérés par les règles de pertinence peut être enrichi, de manière à améliorer la fiabilité associée à la détermination de la pertinence d'un panneau.

Selon un mode de réalisation, les règles de pertinence prédéterminées peuvent comprendre l'une au moins des règles suivantes :
- pour un panneau de stop, si les deux bords de voie de la route sont déterminés à partir des données reçues, le panneau de stop n'est pas pertinent s'il est plus proche latéralement du bord de voie gauche de la route ;
- pour un panneau de stop, le panneau n'est pas pertinent s'il est situé à une distance longitudinale supérieure à une première distance seuil prédéterminée d'une fin de bord de voie droite de la route ;
- pour un panneau de cédez-le-passage, le panneau n'est pas pertinent s'il est situé à une distance longitudinale supérieure à la première distance seuil prédéterminée d'une fin du bord de route le plus proche latéralement du panneau.

Ainsi, l'ensemble de règles peut être enrichi sur la base de règles de pertinence qui excluent explicitement la pertinence de panneaux dans certaines situations de conduite.

Selon un mode de réalisation, les règles de pertinence qui déterminent qu'un panneau n'est pas pertinent peuvent être prioritaires sur les règles de pertinence qui déterminent qu'un panneau est pertinent.

Un tel mode de réalisation permet d'éviter tout conflit entre règles qui provoquerait une indécision du module d'assistance à la conduite, ce qui pourrait conduire à des problèmes de sécurité.

Selon un mode de réalisation, les données reçues peuvent comprendre des données issues d'une caméra dirigée en avant du véhicule.

Ainsi, l'invention tire partie d'équipements déjà présents dans la plupart des véhicules automobiles.

Selon un mode de réalisation, les données reçues peuvent comprendre des données cartographiques descriptives de la route sur laquelle circule le véhicule.

Ainsi, l'invention tire partie de données déjà présentes dans la plupart des véhicules automobiles.

Un deuxième aspect de l'invention concerne un programme informatique comportant des instructions pour la mise en œuvre du procédé selon le premier aspect de l'invention, lorsque ces instructions sont exécutées par un processeur.

Un troisième aspect de l'invention concerne un module d'assistance à la conduite d'un véhicule automobile, comprenant
- une interface de réception de données représentatives d'une situation de conduite en avant du véhicule automobile
- un processeur configuré pour
   ∘ détecter un panneau de stop ou un panneau de cédez-le-passage à partir des données reçues ;
   ∘ déterminer des bords de voie de la route en fonction des données reçues ;
   ∘ estimer une distance longitudinale entre un début ou une fin du bord de voie de la route et le panneau ;
   ∘ appliquer des règles de pertinence prédéterminées au moins à ladite distance longitudinale pour déterminer si le panneau de stop ou de cédez-le-passage est pertinent ou non pour le véhicule automobile ;
   ∘ si le panneau de stop ou de cédez-le-passage est pertinent pour le véhicule automobile, générer d'une consigne d'assistance à la conduite et transmettre la consigne d'assistance à la conduite à un module de contrôle du véhicule via une deuxième interface.

D'autres caractéristiques et avantages de l'invention apparaîtront à l'examen de la description détaillée ci-après, et des dessins annexés sur lesquels :
[Fig 1] illustre un véhicule automobile selon un mode de réalisation de l'invention;
[Fig 2] est un diagramme illustrant les étapes d'un procédé selon un mode de réalisation de l'invention ;
[Fig 3a] à [Fig 3g] illustrent plusieurs situations de conduite pour l'application de règles de pertinence selon un mode de réalisation de l'invention ;
[Fig 4] présente la structure d'un module d'assistance à la conduite selon un mode de réalisation de l'invention.

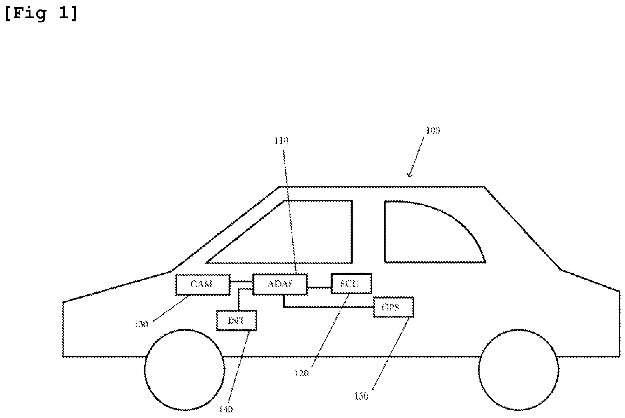

La figure 1 illustre un véhicule automobile 100 selon un mode de réalisation de l'invention.

Le véhicule 100 comprend un module d'assistance à la conduite, ou ADAS, 110 apte à mettre en œuvre une ou plusieurs fonctions d'assistance à la conduite,qui permettent d'assister le conducteur du véhicule voire de contrôler intégralement certains paramètres du pilotage du véhicule, tels que la vitesse par exemple.

Le module ADAS 110 intègre au moins une fonction de régulation de vitesse du véhicule, par laquelle il est apte à générer des consignes d'assistance à la conduite, telles que des consignes d'accélération/décélération à destination d'une unité de contrôle du véhicule 120, telle qu'une unité électronique de commande, ECU pour « Electronic Control Unit » en anglais. L'unité de contrôle 120 peut être une unité de contrôle centralisée ou peut être dédiée à l'exécution des consignes d'accélération/décélération uniquement.

Le véhicule 100 peut comprendre en outre une caméra 130 apte à acquérir des images de la route en avant du véhicule 100. Aucune restriction n'est attachée à la technologie associée à la caméra 130. La caméra 130 est en outre apte à transmettre les images acquises au module ADAS 110. En variante, la caméra 130 est apte à pré-traiter les données acquises et à transmettre les résultats du traitement appliqué au module ADAS 110. Par exemple, dans le cas de la présente invention, la caméra 130 peut être apte à identifier des panneaux de signalisation, en particulier des panneaux de stop et/ou des panneaux de cédez-le-passage.

Le véhicule 100 peut comprendre en outre une interface sans fil 140, qui peut être bidirectionnelle, afin de communiquer avec un réseau étendu, via un réseau mobile, de type 3G, 4G, 5G ou toute génération suivante. L'interface sans fil 140 permet notamment d'accéder à un serveur distant stockant des données cartographiques, indiquant la position de routes les unes par rapport aux autres sur un territoire donné. En variante ou en complément, de telles données cartographiques peuvent être stockées en local dans le véhicule 100.

Le véhicule 100 peut comprendre en outre un module de géolocalisation 150, tel qu'un module GPS, pour « Global Positioning System » en anglais. Le module de géolocalisation 150 est apte à déterminer des coordonnées spatiales du véhicule 100 de manière à permettre de localiser le véhicule 100 sur une carte issue de données cartographiques stockées dans le véhicule 100 ou accessibles via l'interface sans fil 140.

Le véhicule 100 peut en outre comprendre des capteurs, non représentés sur la figure 1, aptes à transmettre des données de capteur au module ADAS 110 pour l'assistance à la conduite ou la conduite autonome du véhicule 100.

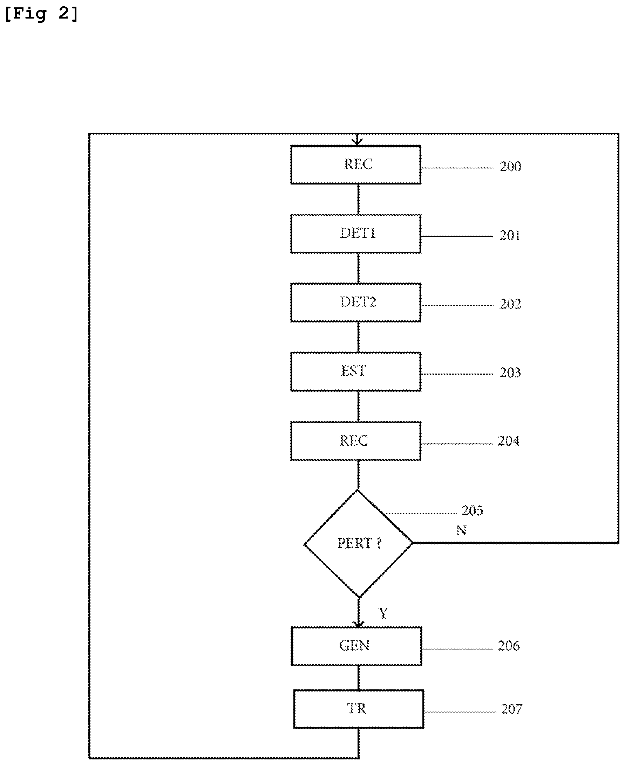

La figure 2 est un diagramme illustrant les étapes d'un procédé selon un mode de réalisation de l'invention. Le procédé est mis en œuvre par le module ADAS 110 décrit ci-dessus.

A une étape 200, le module ADAS 110 reçoit des données représentatives d'une situation de conduite en avant du véhicule automobile 100. Les données reçues peuvent être de préférence issues de la caméra 130, auquel cas les données sont des images pré-traitées ou non par la caméra 130. En complément, les données peuvent comprendre des données cartographiques stockées dans le véhicule 100 ou dans le serveur distant accessible via l'interface sans fil 140. Les données reçues peuvent également comprendre une géolocalisation du véhicule 100 depuis le module GPS 150.

A une étape 201, le module ADAS 110 détecte un panneau de stop ou un panneau de cédez-le-passage à partir des données reçues. Une telle détection dans des images de caméra est bien connue par la personne du métier, notamment via un traitement de reconnaissance de formes dans les images reçues.

A une étape 202, le module ADAS 110 détermine des bords de voie de la route sur laquelle circule le véhicule, à partir des données reçues. Les mêmes données de caméra peuvent être utilisées pour identifier les bords de voie de la route. En variante, les bords de voie en avant du véhicule peuvent être identifiés à partir de la localisation GPS du véhicule et de données cartographiques. Le module ADAS 110 peut également déterminer un unique bord de voie, notamment lorsqu'il est incapable à partir des données reçues d'identifier un deuxième bord de voie.

A une étape 203, le module ADAS 110 estime une distance longitudinale entre un début ou une fin de bord de voie de la route, et le panneau détecté à l'étape 201. Aucune restriction n'est attachée à la manière dont est déterminée la distance longitudinale. Elle peut notamment être basée sur les données de caméra reçues. Les données de caméra peuvent être utilisées en combinaison avec des données cartographiques pour déterminer la distance longitudinale 100. On entend par distance longitudinale la distance selon une direction principale de la route sur laquelle circule le véhicule. La distance longitudinale se distingue ainsi d'une distance latérale qui est une distance selon un axe normal à la direction principale de la route sur laquelle circule le véhicule 100.

A une étape 204, le module ADAS 110 applique des règles de pertinence prédéterminées au moins à la distance longitudinale pour déterminer si le panneau détecté est pertinent ou non pour le véhicule automobile. Aucune restriction n'est attachée aux règles de pertinence prédéterminées qui peuvent notamment dépendre de la législation en vigueur dans le pays dans lequel circule le véhicule automobile 100.

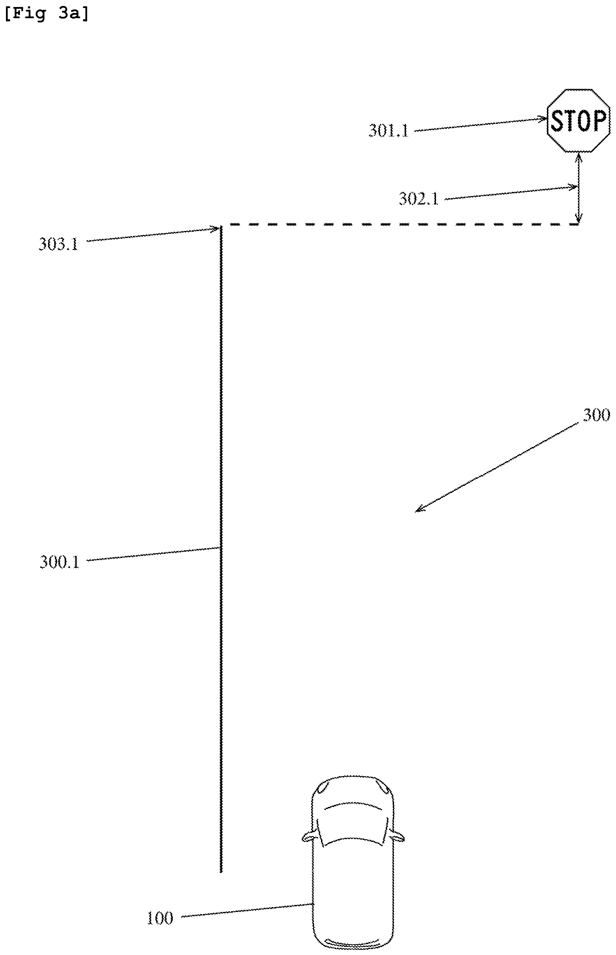

Des exemples de règles de pertinence sont données ci-après, en référence à diverses situations de conduites présentées sur les figures 3a à 3g.

Sur la figure 3a, le véhicule 100 circule sur une route 300. Un bord de voie gauche 300.1 a été détecté par le module ADAS 110, ainsi qu'une fin 303.1 du bord de voie gauche. Le module ADAS détecte également un panneau 301.1, tel qu'un panneau de stop dans l'exemple de la figure 3a. Le panneau 301.1, bien que n'étant latéralement pas proche du bord de voie gauche, est associé au bord de voie gauche par absence de détection d'un bord de voie droite. Une distance longitudinale 302.1 est estimée entre la fin 303.1 du bord de voie gauche et le panneau 301.1.

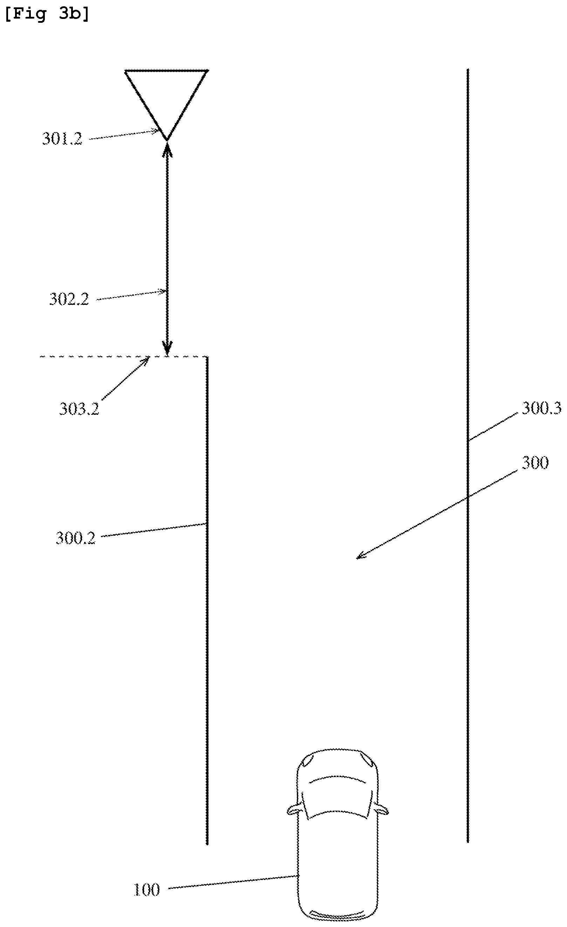

Sur la figure 3b, le véhicule 100 circule toujours sur la route 300. Un bord de voie gauche 300.2 et un bord de voie droite 300.3 sont détectés par le module ADAS, ainsi qu'une fin 303.2 de bord de voie gauche. Le module ADAS détecte en outre un panneau 301.2, tel qu'un panneau de cédez-le-passage. Comparativement à la première situation de la figure 3a, le module ADAS 110 détecte ainsi les deux bords de voie, et associe le panneau 301.2 détecté au bord de voie qui lui est le plus proche, à savoir le bord de voie gauche 300.2.

Le module ADAS 110 estime une distance longitudinale 302.2 entre la fin 303.2 du bord de voie gauche et le panneau 301.2.

Une première règle de pertinence peut être qu'un panneau de stop ou de cédez-le-passage est considéré comme pertinent s'il est à une distance longitudinale inférieure à une première distance seuil prédéterminée d'une fin de bord de voie gauche ou droite dont le panneau est le plus proche latéralement. La première distance seuil peut être comprise entre 2 et 4 mètres, par exemple égale à 3 mètres.

Appliquée à la situation de conduite de la figure 3a, cette première règle conduit le module ADAS 110 à considérer le panneau de stop 301.1 comme pertinent si la distance longitudinale 302.1 est inférieure à la première distance seuil prédéterminée,

Appliquée à la situation de conduite de la figure 3b, cette première règle conduit le module ADAS 110 à considérer le panneau de cédez-le-passage 301.2 comme pertinent si la distance longitudinale 302.2 est inférieure à la première distance seuil prédéterminée.

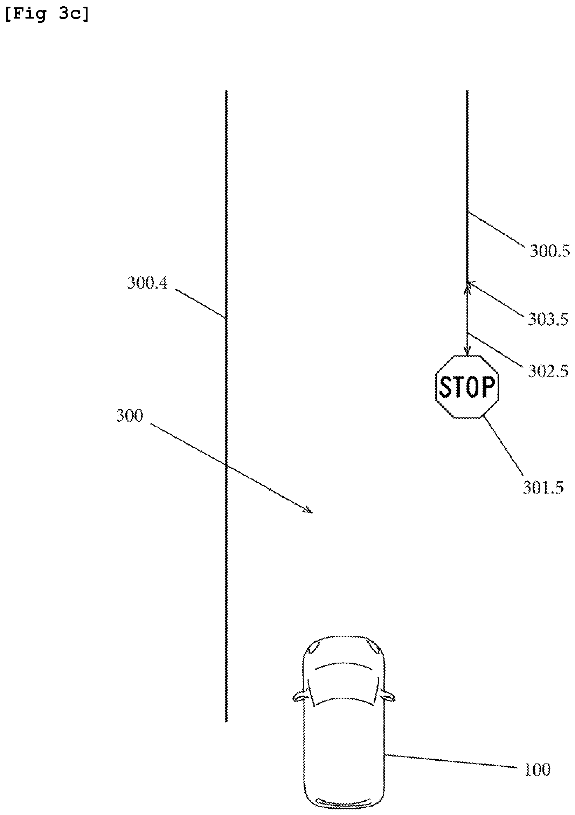

Sur la figure 3c, le véhicule 100 circule sur la route 300, et un bord de voie gauche 300.4 ainsi qu'un bord de voie droite 300.5 ont été détectés par le module ADAS 110. Le module ADAS 110 détermine également un début 303.5 de bord de voie droite ainsi qu'un panneau 301.5, tel qu'un panneau de stop. Une distance longitudinale 302.5 entre le début de bord de voie droite 300.5 et le panneau de stop 301.5 est estimé par le module ADAS 110 tel que décrit précédemment. Une deuxième règle de pertinence peut être qu'un panneau de stop ou un panneau de cédez-le-passage est considéré comme pertinent s'il est à une distance longitudinale supérieure à une deuxième distance seuil prédéterminée d'une début de bord de voie gauche ou droite dont le panneau est le plus proche latéralement.

Appliquée à la situation de conduite de la figure 3c, cette deuxième règle conduit le module ADAS 110 à considérer le panneau de stop 301.5 comme pertinent si la distance longitudinale 302.5 est supérieure à la deuxième distance seuil prédéterminée, qui peut être comprise entre 2 et 4 mètres, par exemple égale à 3 mètres. La première distance seuil et la deuxième distance seuil peuvent ainsi être égales.

En plus des deux premières règles, ou de manière alternative, l'ensemble de règles prédéterminées peuvent être basées sur la distance longitudinale déterminée, comme les première et deuxième règles ci-dessus, mais également sur le type de panneau détecté parmi un panneau de stop et un panneau de cédez-le-passage, et sur bord de voie le plus proche latéralement du panneau. Des exemples de troisième, quatrième et cinquième règles sont données ci-après.

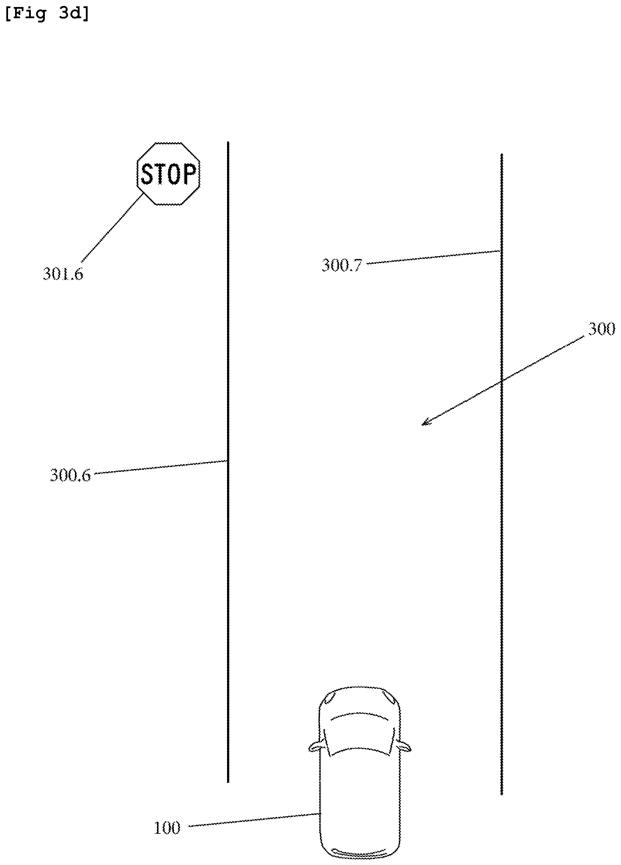

Sur la figure 3d, le véhicule 100 circule sur la route 300, et un bord de voie gauche 300.6 ainsi qu'un bord de voie droite 300.7 ont été détectés par le module ADAS 110. Le module ADAS 110 détermine également un panneau 301.6, tel qu'un panneau de stop, situé latéralement proche du bord de voie gauche 300.6.

Une troisième règle peut être que, pour un panneau de stop, si les deux bords de voie de la route sont déterminés à partir des données reçues, le panneau de stop n'est pas pertinent s'il est plus proche latéralement du bord de voie gauche de la route.

Ainsi, appliquée à la situation de la figure 3d, cette troisième règle conduit le module ADAS 110 à considérer le panneau de stop 301.6 comme non pertinent pour le véhicule automobile 100.

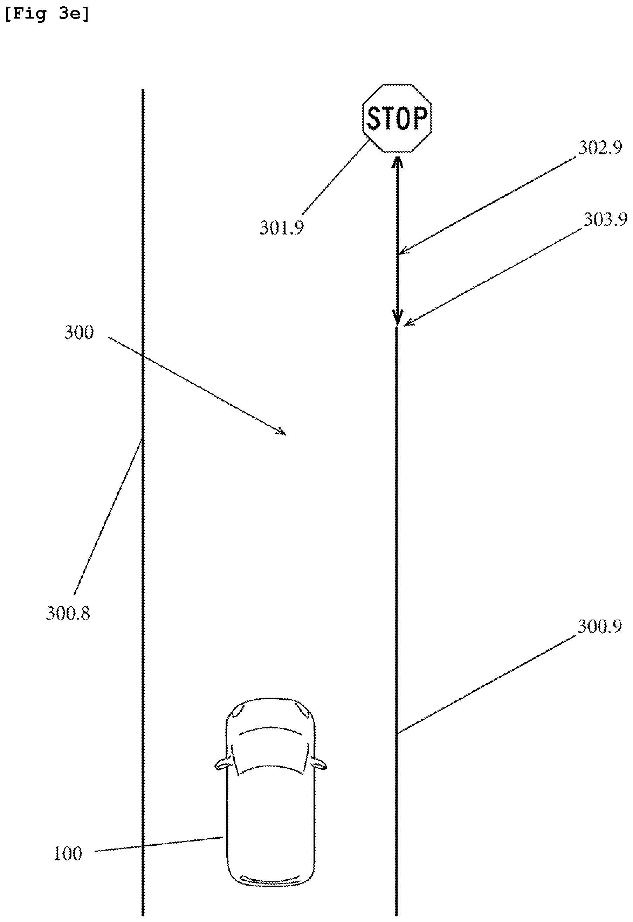

Sur la figure 3e, le véhicule 100 circule sur la route 300, et un bord de voie gauche 300.8 et un bord de voie droite 300.9 ont été détectés par le module ADAS 110. Le module ADAS 110 détermine également un panneau 301.9, tel qu'un panneau de stop, situé latéralement proche du bord de voie droite 300.9. La troisième règle n'exclut donc pas le panneau 301.9. Le module ADAS 110 détermine en outre une fin de bord de voie droite 303.9, et estime une distance longitudinale 302.9 entre le panneau 301.9 et la fin de bord de voie droite 303.9.

Une quatrième règle peut être que, pour un panneau de stop, le panneau n'est pas pertinent s'il est situé à une distance longitudinale supérieure à la première distance seuil prédéterminée d'une fin de bord de voie droite de la route.

Ainsi, appliquée à la situation de conduite de la figure 3e, cette quatrième règle conduit le module ADAS 110 à considérer que le panneau de stop 301.9 n'est pas pertinent si la distance longitudinale 302.9 est supérieure à la première distance seuil prédéterminée.

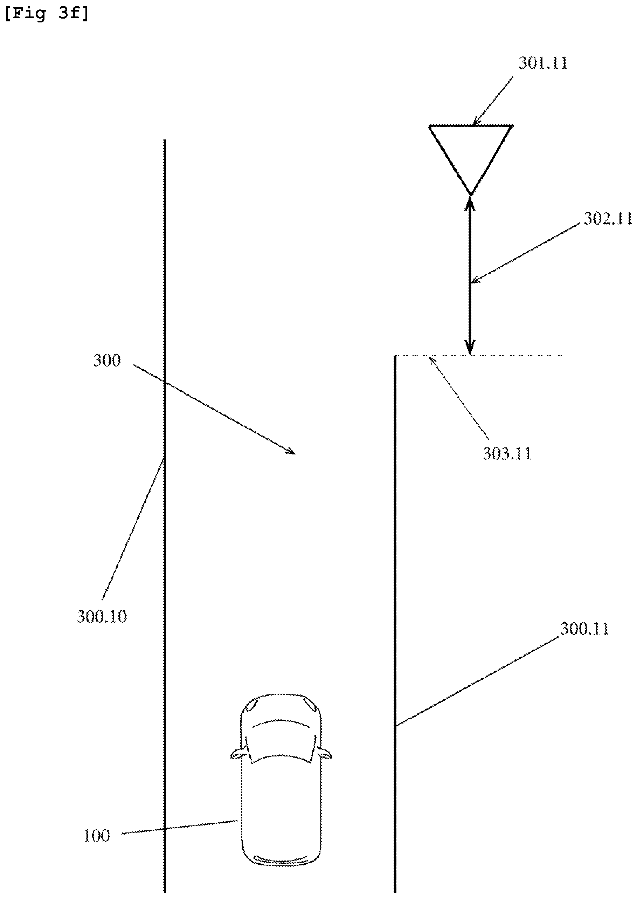

Sur la figure 3f, le véhicule 100 circule sur la route 300, et un bord de voie gauche 300.10 et un bord de voie droite 300.11 ont été détectés par le module ADAS 110. Le module ADAS 110 détermine également un panneau 301.11, tel qu'un panneau de cédez-le-passage, situé latéralement proche du bord de voie droite 300.11. Le module ADAS 110 détermine en outre une fin de bord de voie droite 303.11, et estime une distance longitudinale 302.11 entre le panneau 301.11 et la fin de bord de voie droite 303.11.

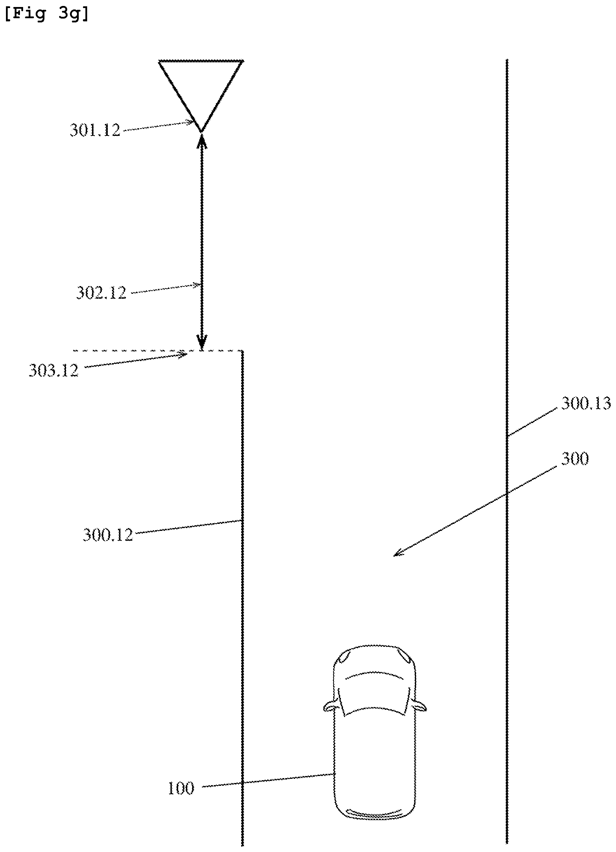

Sur la figure 3g, le véhicule 100 circule sur la route 300, et un bord de voie gauche 300.12 et un bord de voie droite 300.13 ont été détectés par le module ADAS 110. Le module ADAS 110 détermine également un panneau 300.12, tel qu'un panneau de cédez-le-passage, situé latéralement proche du bord de voie droite 300.12. Le module ADAS 110 détermine en outre une fin de bord de voie droite 303.12, et estime une distance longitudinale 302.12 entre le panneau 301.12 et la fin de bord de voie gauche 303.12.

Une cinquième règle peut être que, pour un panneau de cédez-le-passage, le panneau n'est pas pertinent s'il est situé à une distance longitudinale supérieure à la première distance seuil prédéterminée d'une fin de bord de voie gauche ou droite de la route.

Ainsi, appliquée à la situation de conduite de la figure 3f, cette cinquième règle conduit le module ADAS 110 à considérer que le panneau de cédez-le-passage 301.11 n'est pas pertinent si la distance longitudinale 302.11 est supérieure à la première distance seuil prédéterminée. De même, appliquée à la situation de conduite de la figure 3g, la cinquième règle conduit le module ADAS 110 à considérer que le panneau de cédez-le-passage 301.12 n'est pas pertinent si la distance longitudinale 302.12 est supérieure à la première distance seuil prédéterminée.

Ainsi, les troisième, quatrième et cinquième règles sont des règles de pertinence qui indiquent qu'un panneau n'est pas pertinent tandis que les première et deuxième règles sont des règles de pertinence qui indiquent qu'un panneau est pertinent. Les règles de pertinence qui indiquent qu'un panneau n'est pas pertinent peuvent prévaloir sur les règles de pertinence qui indiquent qu'un panneau est pertinent. Cela signifie qu'en cas de contradiction entre deux règles, c'est la règle de pertinence qui indique qu'un panneau n'est pas pertinent qui s'applique en priorité pour déterminer la pertinence d'un panneau.

En se référent à nouveau à la figure 2, le module ADAS 100 applique donc l'ensemble de règles prédéterminées à l'étape 204 pour déterminer si le panneau détecté est pertinent ou non à l'étape 205.

Si le panneau n'est pas pertinent, le procédé retourne à l'étape 200 jusqu'à réception de nouvelles données descriptives de la situation de conduite en avant du véhicule 100.

Si le panneau est pertinent, le module ADAS 110 génère une consigne d'assistance à la conduite à une étape 206 et transmet la consigne d'assistance à la conduite à l'ECU 120 à une étape 207.

La consigne d'assistance à la conduite peut être une consigne de régulation de la vitesse. En particulier, si un panneau est détecté comme pertinent, la consigne de régulation de la vitesse peut être une consigne de décélération du véhicule 100.

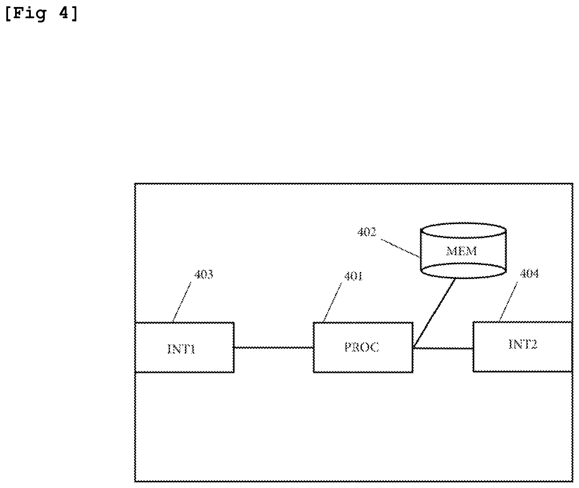

La figure 4 présente une structure du module d'assistance à la conduite, ADAS, 110 d'un véhicule automobile 100, selon un mode de réalisation de l'invention.

Le module ADAS 110 comprend un processeur 401 configuré pour communiquer de manière unidirectionnelle ou bidirectionnelle, via un ou des bus ou via une connexion filaire, avec une mémoire 402 telle qu'une mémoire de type « Random Access Memory », RAM, ou une mémoire de type « Read Only Memory », ROM, ou tout autre type de mémoire (Flash, EEPROM, etc). En variante, la mémoire 402 comprend plusieurs mémoires des types précités. De manière préférentielle, la mémoire 402 est une mémoire non volatile.

La mémoire 402 est apte à stocker, de manière permanente ou temporaire, les règles de pertinence décrites précédemment. La mémoire peut en outre stocker les données cartographiques décrites précédemment.

Le processeur 401 est apte à exécuter des instructions, stockées dans la mémoire 402, pour la mise en œuvre des étapes du procédé illustré en référence à la figure 2. De manière alternative, le processeur 401 peut être remplacé par un microcontrôleur conçu et configuré pour réaliser les étapes du procédé selon l'invention.

Le module ADAS 110 peut comprendre une première interface 403 apte à communiquer avec la caméra 130 ou avec l'interface 140 pour la réception des données à l'étape 200 permettant de détecter des panneaux, des bords de voie et des distances longitudinales lors des étapes 201, 202 et 203. Aucune restriction n'est attachée la première interface qui peut être une interface filaire par exemple, ou alternativement sans fil. En variante, la première interface 403 peut intégrer l'interface 140 permettant de communiquer avec le réseau étendu de type Internet.

Le module ADAS 110 peut comprendre en outre une deuxième interface 304 apte à communiquer avec l'ECU 120, notamment pour la transmission de consignes d'assistance à la conduite du véhicule automobile 100.

La présente invention ne se limite pas aux formes de réalisation décrites ci-avant à titre d'exemples ; elle s'étend à d'autres variantes, à condition que ces objets entrent dans le cadre des revendications annexées.

## Revendications

1. Procédé d'assistance à la conduite d'un véhicule automobile (100) mis en œuvre par un module d'assistance à la conduite (110) du véhicule automobile et comprenant les étapes suivantes :
• réception (200) de données représentatives d'une situation de conduite en avant du véhicule automobile
• détection (201) d'un panneau de stop (301.1; 301.5; 301.6; 301.9) ou d'un panneau de cédez-le-passage (301.2; 301.11; 301.12) à partir des données reçues ;
• détermination (202) d'au moins un bord de voie de route (300) en fonction des données reçues ;
• estimation (203) d'une distance longitudinale (302.1; 302.2; 302.5 ; 302.9; 302.11; 302.12) entre un début ou une fin du bord de voie de la route et le panneau ;
• application (204) de règles de pertinence prédéterminées au moins à ladite distance longitudinale pour déterminer (205) si le panneau de stop ou de cédez-le-passage est pertinent ou non pour le véhicule automobile ;
• si le panneau de stop ou de cédez-le-passage est pertinent pour le véhicule automobile, génération (206) d'une consigne d'assistance à la conduite et transmission (207) de la consigne à un module de contrôle (120) du véhicule.

2. Procédé selon la revendication 1, dans lequel les règles de pertinence comprennent l'une au moins des règles suivantes :
- le panneau de stop (301.1; 301.5; 301.6; 301.9) ou de cédez-le-passage (301.2; 301.11; 301.12) est considéré comme pertinent s'il est à une distance longitudinale (302.1; 302.2; 302.5 ; 302.9; 302.11; 302.12) inférieure à une première distance seuil prédéterminée d'une fin du bord de voie gauche ou droite dont le panneau est le plus proche latéralement ;
- le panneau de stop ou de cédez-le-passage est considéré comme pertinent s'il est à une distance longitudinale supérieure à une deuxième distance seuil prédéterminée d'un début de bord de voie gauche ou droit dont le panneau est le plus proche latéralement.

3. Procédé selon la revendication 2, dans lequel les première et deuxième distances seuil prédéterminées sont comprises entre 2 et 4 mètres, par exemple égales à 3 mètres.

4. Procédé selon l'une des revendications précédentes, dans lequel les règles de pertinence prédéterminées sont appliquées à la distance longitudinale (302.1; 302.2; 302.5 ; 302.9; 302.11; 302.12) déterminée, au type de panneau détecté parmi un panneau de stop (301.1; 301.5; 301.6; 301.9) et un panneau de cédez-le-passage (301.2; 301.11; 301.12), et au bord de voie le plus proche latéralement du panneau.

5. Procédé selon l'une des revendications précédentes, dans lequel les règles de pertinence prédéterminées comprennent l'une au moins des règles suivantes :
- pour un panneau de stop (301.1; 301.5; 301.6; 301.9), si les deux bords de voie de la route sont déterminés à partir des données reçues, le panneau de stop n'est pas pertinent s'il est plus proche latéralement du bord de voie gauche de la route ;
- pour un panneau de stop, le panneau n'est pas pertinent s'il est situé à une distance longitudinale supérieure à une première distance seuil prédéterminée d'une fin de bord de voie droite de la route ;
- pour un panneau de cédez-le-passage (301.2; 301.11; 301.12) , le panneau n'est pas pertinent s'il est situé à une distance longitudinale supérieure à la première distance seuil prédéterminée d'une fin du bord de route le plus proche latéralement du panneau.

6. Procédé selon l'une des revendications précédentes, dans lequel les règles de pertinence qui déterminent qu'un panneau n'est pas pertinent sont prioritaires sur les règles de pertinence qui déterminent qu'un panneau est pertinent.

7. Procédé selon l'une des revendications précédentes, dans lequel les données reçues comprennent des données issues d'une caméra (130) dirigée en avant du véhicule (100).

8. Procédé selon l'une des revendications précédentes, dans lequel les données reçues comprennent des données cartographiques descriptives de la route (300) sur laquelle circule le véhicule (100).

9. Programme informatique comportant des instructions pour la mise en œuvre du procédé selon l'une quelconque des revendications précédentes, lorsque ces instructions sont exécutées par un processeur (401).

10. Module d'assistance à la conduite (110) d'un véhicule automobile (100), comprenant
• une interface de réception (403) de données représentatives d'une situation de conduite en avant du véhicule automobile
• un processeur (401) configuré pour
∘ détecter un panneau de stop (301.1; 301.5; 301.6; 301.9) ou un panneau de cédez-le-passage (301.2; 301.11; 301.12) à partir des données reçues ;
∘ déterminer des bords de voie de route en fonction des données reçues ;
∘ estimer une distance longitudinale (302.1; 302.2; 302.5 ; 302.9; 302.11; 302.12) entre un début ou une fin du bord de voie de la route et le panneau ;
∘ appliquer des règles de pertinence prédéterminées au moins à ladite distance longitudinale pour déterminer si le panneau de stop ou de cédez-le-passage est pertinent ou non pour le véhicule automobile ;
∘ si le panneau de stop ou de cédez-le-passage est pertinent pour le véhicule automobile, générer d'une consigne d'assistance à la conduite et transmettre la consigne d'assistance à la conduite à un module de contrôle du véhicule via une deuxième interface (402) du module d'assistance à la conduite.

## Patentansprüche

1. Ein Verfahren zur Unterstützung des Fahrens eines Kraftfahrzeugs (100), das durch ein Fahrassistenzmodul (110) des Kraftfahrzeugs realisiert wird und die folgenden Schritte umfasst:
• Empfang (200) von Daten, die eine Vorwärtsfahrsituation des Kraftfahrzeugs repräsentieren
• Erkennung (201) eines Stoppschildes (301.1; 301.5; 301.6; 301.9) oder eines Vorfahrt-achten-Schildes (301.2; 301.11; 301.12) aus den empfangenen Daten;
• Bestimmung (202) von mindestens einer Straßenkante (300) auf der Grundlage der erhaltenen Daten;
• Schätzung (203) eines Längsabstandes (302.1; 302.2; 302.5; 302.9; 302.11; 302.12) zwischen dem Anfang oder Ende des Straßenrandes und dem Schild;
• Anwendung (204) von vorbestimmten Relevanzregeln zumindest in diesem Längsabstand, um (205) festzustellen, ob das Stopp- oder Vorfahrtsschild für das Kraftfahrzeug relevant ist oder nicht;
• Wenn das Stopp- oder Vorfahrtsschild für das Kraftfahrzeug relevant ist, Generierung (206) einer Fahrassistenzanweisung und Übermittlung (207) der Anweisung an ein Steuergerät (120) des Fahrzeugs.

2. Verfahren nach Anspruch 1, wobei die Relevanzregeln mindestens eine der folgenden Regeln umfassen:
- Das Stoppschild (301.1; 301.5; 301.6; 301.9) oder das Vorfahrtsschild (301.2; 301.11; 301.12) wird als relevant betrachtet, wenn es sich in einem Längsabstand (302.1; 302.2; 302.5; 302.9; 302.11; 302.12) befindet, der kleiner ist als ein erster vorbestimmter Schwellenwertabstand von dem Ende des linken oder rechten Straßenrandes, dem das Schild seitlich am nächsten liegt;
- Das Stopp- oder Vorfahrtsschild gilt als relevant, wenn es sich in einem Längsabstand befindet, der größer ist als ein zweiter, vorbestimmter Schwellenwertabstand vom Beginn des linken oder rechten Straßenrandes, dem das Schild seitlich am nächsten liegt.

3. Verfahren nach Anspruch 2, wobei die erste und die zweite vorbestimmte Schwellendistanz zwischen 2 und 4 Metern liegen, beispielsweise gleich 3 Metern.

4. Verfahren nach einem der vorhergehenden Ansprüche, wobei die vorbestimmten Relevanzregeln auf den ermittelten Längsabstand (302.1; 302.2; 302.5; 302.9; 302.11; 302.12), auf die Art des erkannten Schildes (Stoppschild (301.1; 301.5; 301.6; 301.9) oder Vorfahrt gewähren-Schild (301.2; 301.11; 301.12)) und auf den seitlich dem Schild nächstgelegenen Straßenrand angewendet werden.

5. Verfahren nach einem der vorhergehenden Ansprüche, wobei die vorbestimmten Relevanzregeln mindestens eine der folgenden Regeln umfassen:
- bei einem Stoppschild (301.1; 301.5; 301.6; 301.9), wenn beide Fahrbahnränder aus den empfangenen Daten bestimmt werden, ist das Stoppschild nicht relevant, wenn es seitlich näher am linken Fahrbahnrand liegt;
- Bei einem Stoppschild ist das Schild nicht relevant, wenn es sich in einem Längsabstand befindet, der größer ist als ein erster vorgegebener Schwellenwert vom Ende der rechten Fahrbahnseite.
- Bei einem Vorfahrt-achten-Schild (301.2; 301.11; 301.12) ist das Schild nicht relevant, wenn es sich in einem Längsabstand befindet, der größer ist als der erste vorgegebene Schwellenwertabstand von einem Ende der Straßenseite, das seitlich am nächsten zum Schild liegt.

6. Verfahren nach einem der vorhergehenden Ansprüche, wobei die Relevanzregeln, die bestimmen, dass ein Zeichen nicht relevant ist, Vorrang vor den Relevanzregeln haben, die bestimmen, dass ein Zeichen relevant ist.

7. Verfahren nach einem der vorhergehenden Ansprüche, wobei die empfangenen Daten Daten einer Kamera (130) umfassen, die nach vorne auf das Fahrzeug (100) gerichtet ist.

8. Verfahren nach einem der vorhergehenden Ansprüche, wobei die empfangenen Daten beschreibende Kartendaten der Straße (300) umfassen, auf der das Fahrzeug (100) fährt.

9. Computerprogramm mit Anweisungen zur Durchführung des Verfahrens nach einem der vorhergehenden Ansprüche, wenn diese Anweisungen von einem Prozessor (401) ausgeführt werden.

10. Fahrerassistenzmodul (110) eines Kraftfahrzeugs (100), bestehend aus
• eine Empfangsschnittstelle (403) für Daten, die eine Vorwärtsfahrsituation des Kraftfahrzeugs repräsentieren
• ein Prozessor (401), der konfiguriert ist für
∘ aus den empfangenen Daten ein Stoppschild (301.1; 301.5; 301.6; 301.9) oder ein Vorfahrt-achten-Schild (301.2; 301.11; 301.12) erkennen;
∘ Ermittlung der Straßenränder auf Basis der empfangenen Daten;
∘ Schätzen Sie den Längenabstand (302.1; 302.2; 302.5; 302.9; 302.11; 302.12) zwischen dem Anfang oder Ende des Straßenrandstreifens und dem Schild;
∘ Vorab festgelegte Relevanzregeln zumindest auf den genannten Längsabstand anwenden, um zu bestimmen, ob das Stopp- oder Vorfahrtsschild für das Kraftfahrzeug relevant ist oder nicht;
∘ Ist das Stopp- oder Vorfahrtsschild für das Kraftfahrzeug relevant, wird eine Fahrassistenzanweisung generiert und diese über eine zweite Schnittstelle (402) des Fahrassistenzmoduls an ein Fahrzeugsteuergerät übermittelt.

## Claims

1. A method for assisting the driving of a motor vehicle (100) implemented by a driving assistance module (110) of the motor vehicle and comprising the following steps:
• reception (200) of data representative of a forward driving situation of the motor vehicle
• detection (201) of a stop sign (301.1; 301.5; 301.6; 301.9) or a yield sign (301.2; 301.11; 301.12) from the received data;
• determination (202) of at least one roadside edge (300) based on the data received;
• estimation (203) of a longitudinal distance (302.1; 302.2; 302.5; 302.9; 302.11; 302.12) between a beginning or end of the roadside edge and the sign;
• application (204) of predetermined relevance rules at least at said longitudinal distance to determine (205) whether the stop or yield sign is relevant or not to the motor vehicle;
• if the stop or yield sign is relevant to the motor vehicle, generation (206) of a driving assistance instruction and transmission (207) of the instruction to a control module (120) of the vehicle.

2. A method according to claim 1, wherein the relevance rules include at least one of the following rules:
- the stop sign (301.1; 301.5; 301.6; 301.9) or yield sign (301.2; 301.11; 301.12) is considered relevant if it is at a longitudinal distance (302.1; 302.2; 302.5; 302.9; 302.11; 302.12) less than a first predetermined threshold distance from an end of the left or right edge of the road to which the sign is closest laterally;
- the stop or yield sign is considered relevant if it is at a longitudinal distance greater than a second predetermined threshold distance from the beginning of the left or right edge of the road to which the sign is closest laterally.

3. A method according to claim 2, wherein the first and second predetermined threshold distances are between 2 and 4 meters, for example equal to 3 meters.

4. A method according to any one of the preceding claims, wherein the predetermined relevance rules are applied to the determined longitudinal distance (302.1; 302.2; 302.5; 302.9; 302.11; 302.12), to the type of sign detected among a stop sign (301.1; 301.5; 301.6; 301.9) and a yield sign (301.2; 301.11; 301.12), and to the edge of the road closest laterally to the sign.

5. A method according to any one of the preceding claims, wherein the predetermined relevance rules include at least one of the following rules:
- for a stop sign (301.1; 301.5; 301.6; 301.9), if both edges of the road are determined from the data received, the stop sign is not relevant if it is closer laterally to the left edge of the road;
- for a stop sign, the sign is not relevant if it is located at a longitudinal distance greater than a first predetermined threshold distance from the end of the righthand side of the road;
- for a yield sign (301.2; 301.11; 301.12), the sign is not relevant if it is located at a longitudinal distance greater than the first predetermined threshold distance from an end of the roadside closest laterally to the sign.

6. A method according to any one of the preceding claims, wherein the relevance rules that determine that a sign is not relevant take precedence over the relevance rules that determine that a sign is relevant.

7. A method according to any one of the preceding claims, wherein the data received includes data from a camera (130) directed forward of the vehicle (100).

8. A method according to any one of the preceding claims, wherein the data received includes descriptive map data of the road (300) on which the vehicle (100) is traveling.

9. Computer program comprising instructions for carrying out the method according to any one of the preceding claims, when these instructions are executed by a processor (401).

10. Driver assistance module (110) of a motor vehicle (100), comprising
• a receiving interface (403) for data representative of a forward driving situation of the motor vehicle
• a processor (401) configured for
∘ detect a stop sign (301.1; 301.5; 301.6; 301.9) or a yield sign (301.2; 301.11; 301.12) from the received data;
∘ determine roadside edges based on received data;
∘ estimate a longitudinal distance (302.1; 302.2; 302.5; 302.9; 302.11; 302.12) between a start or end of the roadside verge and the sign;
∘ apply predetermined relevance rules at least to said longitudinal distance to determine whether the stop or yield sign is relevant or not to the motor vehicle;
∘ If the stop or yield sign is relevant to the motor vehicle, generate a driving assistance instruction and transmit the driving assistance instruction to a vehicle control module via a second interface (402) of the driving assistance module.
